## Europäisches Patentamt

## European Patent Office

## Office européen des brevets

(11) Veröffentlichungsnummer: **0 174 907**
**A2**

(12) # EUROPÄISCHE PATENTANMELDUNG

(21) Anmeldenummer: **85810365.8**

(22) Anmeldetag: **07.08.85**

(51) Int. Cl.⁴: **B 01 D 53/34**

(30) Priorität: **13.08.84 CH 3871/84**

(43) Veröffentlichungstag der Anmeldung:
**19.03.86 Patentblatt 86/12**

(84) Benannte Vertragsstaaten:
**AT BE CH DE FR GB IT LI LU NL SE**

(71) Anmelder: **CIBA-GEIGY AG**
**Klybeckstrasse 141**
**CH-4002 Basel(CH)**

(72) Erfinder: **Fattinger, Volker, Dr.**
**Im Lee 39**
**CH-4144 Arlesheim(CH)**

(54) Verfahren zur Entfernung von Stickstoff- und Schwefeloxiden aus Abgasen.

(57) Verfahren zur Enfernung von Stickstoff- und Schwefeloxiden aus Abgasen, insbesondere aus Rauchgasen von Kraftwerken, nach einem modifizierten Stickoxidverfahren zur Herstellung von Schwefelsäure unter Gewinnung von verwertbaren Stickstoff- und Schwefelverbindungen durch Absorption von mehr als der Hälfte vom stickoxidgehalt des in das Verfahren eingeleiteten Abgases und Desorption der stickoxidhaltigen Flüssigkeit, bei dem
a) das freigesetzte Stickoxid mit einem sauerstoffhaltigen Gas zu einem relativ an Stickoxid und Sauerstoff reichen Gas vermischt wird, in welchem sich Stickstoffmonoxid zu Stickstoffdioxid oxidiert, und das entstandene Stickstoffdioxid und/oder daraus hergestellte Salpetersäure sowie ein Restgehalt an Stickstoffmonoxid in den Hauptstrom des zu behandelnden Abgases eingeführt wird, wobei die in das System eingebrachten Molmengen an vier- und fünfwertigen Stickstoff-Sauerstoff-Verbindungen grösser sind als die daneben eingebrachte Molmenge Stickstoffmonoxid, und
b) die mindestens teilweise von Stickoxiden befreite Flüssigkeit oder deren Hauptmenge nach Durchlaufen der Desorptionsanlage in einen oder mehrere der Gasbehandlungstürme des Hauptabgasstroms zurückgeführt wird.

./...

**Fig.1**

GAS-LEITUNGEN
SÄURE-KREISLÄUFE
SÄURE-RÜCKLAUF
SÄURE-VORLAUF
K = KÜHLER

CIBA-GEIGY AG                            71-15038 /+

Basel (Schweiz)


Verfahren zur Entfernung von Stickstoff- und Schwefeloxiden

aus Abgasen
_____

Die Erfindung betrifft ein Verfahren, welches es ermöglicht, die Stickstoff- und Schwefeloxide aus Abgasen gleichzeitig zu entfernen, ohne dazu Kalk, Natronlauge, Ammoniak oder andere Chemikalien zu verwenden.


Die abgeschiedenen Stickoxide dienen als Katalysator zur Oxidation des Schwefeldioxids mittels sauerstoffhaltigem Gas, vorzugsweise Luftsauerstoff. Aus den Schadstoffen entstehen letzten Endes verwertbare Salpetersäure und Schwefelsäure.


Zur Erläuterung der Vorzüge des Verfahrens wird als Beispiel die Reinigung der Rauchgase eines Kraftwerkes herangezogen, welches salzhaltige Braunkohle mit einem Heizwert grösser als 4'500 Kcal/kg als Brennstoff verwendet.


Es wird angenommen, dass das Kraftwerk folgendes Rauchgas verursacht, wobei x in $NO_x$ die Zahlen 1 und 2 bedeutet:

| | |
|---|---|
| Rauchgasmenge | 1 Mio. $Nm^3$ pro Stunde |
| Gehalt an $NO_x$ (berechnet als $NO_2$) | 1,43 $g/Nm^3$ (ca.   700 ppm) |
| Gehalt an $SO_2$ | 12,6  $g/Nm^3$ (ca. 4300 ppm). |


Im Folgenden wird unter ppm-Gehalten immer Volumenteile pro

Million Volumeneinheiten verstanden.

- 2 -

Die Erfindung ermöglicht eine Absenkung der Schadgase auf Werte
kleiner als

$$SO_2 \quad 0,1 \text{ g/Nm}^3 \quad (\text{ca. } 34 \text{ ppm})$$
$$NO_x \quad 0,2 \text{ g/Nm}^3 \quad (\text{ca. } 100 \text{ ppm}).$$

Unter der Voraussetzung, dass ein Kühlwasser verfügbar ist,
dessen Temperatur im Jahresmittel 15°C aufweist, ergibt sich
folgender Betriebsmittelbedarf für die Rauchgasreinigung:

elektrische Energie: unter 3 % der im Kraftwerk produzierten Energie,
Wärmebedarf für die Säure-Konzentrierung im Verfahrensverlauf:
                     entsprechend einem Verbrauch von
                     weniger als 2 % der im Kraftwerk verbrannten Kohle.

Wenn die gemäss der Erfindung erzeugte Salpetersäure (Konzentration höher als 30 %) und Schwefelsäure (Konzentration höher als
75 %) z.B. in einem Düngemittelwerk verwertet werden können,
deckt der Wert der produzierten Säuren die Kosten der oben
genannten Betriebsmittel. Der Investitionsaufwand für ein
Verfahren gemäss der Erfindung liegt unter einem Viertel des
Investitionsaufwandes für das Kraftwerk.

Es ist bekannt, Stickoxide dadurch aus Rauchgasen zu entfernen,
dass man den noch heissen Rauchgasen vor der vollständigen
Wärmenutzung Ammoniak zumischt und sie über einen Katalysator
leitet, wobei die Stickoxide zu Stickstoff reduziert werden.
Ein Nachteil dieses Verfahrens sind die Kosten für den Ammoniak
und die begrenzte Standzeit des Katalysators. Bei salzhaltiger
Kohle verdampfen im Verbrennungsraum Salze, welche Aerosole
bilden, die den Katalysator verschmutzen. Ein weiterer Nachteil

- 3 -

des trockenen und auch des nassen Einsatzes von Ammoniak bei
der Rauchgasreinigung ist die Bildung von Ammonsulfat-Aerosolen
und anderen Salzaerosolen, die trotz hohen Aufwandes nicht
restlos abscheidbar sind. Die mit dem gereinigten Rauchgas
in die Atmosphäre gelangten Aerosole verstärken die Dunstbildung in der Atmosphäre und vermindern die natürliche Sonneneinstrahlung durch Smogbildung.

Im Gegensatz zum bekannten Stand der Technik fallen beim Verfahren gemäss der Erfindung die Betriebskosten mit steigenden
$NO_x$-Gehalten der Rauchgase. Es erübrigen sich also irgendwelche
verbrennungstechnische Massnahmen zur Verminderung der $NO_x$-
Bildung.

In Rauchgasen liegen die Stickoxide zum grössten Teil als NO
vor, welches sehr schlecht absorbierbar ist. Es ist bekannt,
durch Zusatz von Ozon NO in $NO_2$ überzuführen und z.B. mittels
ammoniakalischer Flüssigkeiten zu absorbieren. Ein Nachteil
ist neben den hohen Kosten für die Ozonerzeugung die bereits
erwähnte unvermeidbare Bildung von Aerosolen.

Das Stickoxid-Schwefelsäure-Verfahren ist in den letzten Jahren
- infolge der Bemühungen zur Reinhaltung der Luft - zur Abscheidung von $SO_2$ und $NO_x$ aus Abgasen mit ca. 1 Vol-% $SO_2$ vorgeschlagen worden. Diese Arbeiten sind die Ausgangsbasis der
vorliegenden Erfindung, wobei auf folgende Publikationen verwiesen wird:

- Fattinger, V., Proc. Brit. Sulphur Corp., 3rd Int. Conf.
  Fert., London, November 1979, Paper XXVI
- Blankenstein, K., Neumann, G.E., U.B.A., F und E Bericht
  No. 10403311, Juni 1980

- Sander, U., Fattinger, V., Chem. Ing. Techn., 55 (1983)
  Nr. 8, S. 601/607
- Fattinger, V., CIBA-GEIGY Corporation
  US Patent No. 4 148 868 (1979)
- Fattinger, V., CIBA-GEIGY Corporation,
  US Patent No. 4 242 321 (1980)
- Ullmanns Enzyklopädie der technischen Chemie,
  4., neubearbeitete und erweiterte Auflage, Verlag
  Chemie, Weinheim, Band 21 (1982), S. 148.

Rauchgase von Kraftwerken haben meist nur 0,02-0,5 Vol-% $SO_2$, und man hielt bisher eine $SO_2$-Anreicherung für notwendig, bevor eine Verarbeitung in einem Stickoxid-Schwefelsäure-System möglich wird. Ausserdem besteht in der Fachwelt die Meinung, ein Stickoxid-Schwefelsäure-Verfahren verursache eine Verschmutzung der Atmosphäre durch $NO_x$-Verluste.

Ein Hauptgrund für die Unbrauchbarkeit bekannter Stickoxid-Schwefelsäure-Verfahren für das Verarbeiten von Abgasen aus Kraftwerken ist die hohe Verweilzeit für die Oxidation des im Denitrierturm freigesetzten NO. Voraussetzung für eine Stickoxid-Absorption ist nämlich ein geeignetes Verhältnis $NO:NO_2$.

Es wurde nun gefunden, dass Stickoxid-Schwefelsäure-Systeme mit einem Reaktionsraumbedarf kleiner als 25 $m^3$ pro $Nm^3$/sec Rauchgas betrieben werden können, wenn mehr als die Hälfte vom Stickoxidgehalt des in das Verfahren eingeleiteten Abgases absorbiert und die stickoxidhaltige Flüssigkeit anschliessend einer Desorption unterworfen wird, worauf

a) das freigesetzte Stickoxid mit einem sauerstoffhaltigen Gas zu einem relativ an Stickoxid und Sauerstoff reichen Gas vermischt wird, in welchem sich Stickstoffmonoxid zu Stickstoffdioxid oxidiert, und das entstandene Stickstoffdioxid und/oder daraus hergestellte Salpetersäure sowie ein Restgehalt an Stickstoffmonoxid in den Hauptstrom des zu behandelnden Abgases eingeführt wird, wobei die in das System eingebrachten Molmengen an vier- und fünfwertigen Stickstoff-Sauerstoff-Verbindungen grösser sind als die daneben eingebrachte Molmenge Stickstoffmonoxid, und

b) die mindestens teilweise von Stickoxiden befreite Flüssigkeit oder deren Hauptmenge nach Durchlaufen der Desorptionsanlage in einen oder mehrere der Gasbehandlungstürme des Hauptabgasstromes zurückgeführt wird. Man kann die teilweise oder ganz von Stickstoffverbindungen befreite Säure in die ersten Türme des Systems leiten oder auch zur Gänze oder z.T. in einen der $NO_x$-Absorptionstürme (oder auch in mehrere $NO_x$-Absorptionstürme) am Ende des Systems. Beide Arten der Rückführung der Flüssigkeit können miteinander kombiniert werden.

Weil die Säure zum Zwecke der $NO_x$-Desorption erhitzt und/oder durch Wasser oder schwächere Säure verdünnt wurde, ist es zweckmässig, eine Säurekonzentrierung und/oder eine Säurekühlung vorzunehmen, bevor die denitrierte oder teilweise denitrierte Säure in einen $NO_x$-Absorptionsturm gelangt.

Bei der Behandlung des Abgasstromes wird vor der $SO_2$-Absorption Salpetersäure in den Kreislauf der Denitrierung oder der $SO_2$-Absorption in einer solchen Menge zugegeben, dass sich für die $NO_x$-Absorption ein optimales $NO:NO_2$-Verhältnis einstellt. Diese Massnahme ist nicht neu, und wird z.B. in der US Patentschrift No. 4 242 321 erläutert.

Es wurde des weiteren gefunden, dass man überraschend gute Absorptionsleistungen erzielt und bei relativ hohen Nitrose-Konzentrationen in der Absorptions-Säure arbeiten kann, wenn man die Absorption bei Temperaturen unter 30°C betreibt. Es lohnt sich der Einsatz von Wärmepumpen (Kühlaggregate), um
eine Kühlsole zu erzeugen, welche im indirekten Wärmeaustausch
die Temperatur der Kreislaufsäure vorzugsweise auf Werte unter
20, 15 oder sogar 10°C absenkt. Diese Massnahme erwies sich als
wesentlich kostengünstiger, als eine übermässige Vergrösserung
des Absorptionsraumes.

Ein wichtiges Unterscheidungsmerkmal der Erfindung gegenüber
bekannten Verfahren ist das Arbeiten mit tiefen Säurekonzentrationen in der Denitrierung. Dank einer Konzentration von
unter 73 % Schwefelsäure oder sogar 70 %, wird es möglich, auch
mit der geringen $SO_2$-Konzentration von Krafwerksrauchgasen eine
ausreichende Säuredenitrierung herbeizuführen. Der im Hauptgasstrom eingesetzte Denitrierturm wird dabei vorteilhaft im
Gleichstrom zwischen Gas und Säure betrieben.

Der Ablaufsäure der Grobdenitrierung im Hauptgasstrom kann
einer indirekten Erhitzung und einer Feindenitrierung in einem
Turm unterworfen werden, welcher von einem Teilstrom des
Schwefeldioxids durchströmt wird.

Es besteht auch die Möglichkeit, die gesamte Säuredenitrierung ausserhalb
des Hauptgasstromes durchzuführen und einen Luftstrom und/oder einen $SO_2$-
haltigen Teilgasstrom durch den Denitrierapparat zu leiten. Erforderlichenfalls kann der Luftstrom oder $SO_2$-Gasstrom erhitzt werden, um das Austreiben der Stickoxide zu beschleunigen.

Es ist bekannt, dass der Dampfdruck, der in der Schwefelsäure als Nitrosylschwefelsäure  gelösten Stickoxide durch Zugabe von Salpetersäure stark
erhöht wird. Man kann also erforderlichenfalls die Säuredenitrierung
durch Zusatz von Salpetersäure wesentlich beschleunigen. Die hierfür
erforderliche Salpetersäure entsteht im Verfahren gemäss der Erfindung
aus Stickoxiden und kehrt aus dem Denitrierapparat in Form von Stickoxiden
in den Prozess zurück.

Bevor die denitrierte Säure in die $NO_x$-Absorption gelangt, wird sie in einem Konzentrierturm auf die für eine gute Absorption notwendige Konzentration gebracht (73 bis 76 % $H_2SO_4$). Die heisse, aus dem Konzentrierturm stammende Säure kann vorteilhaft zur Erhitzung des kalten Austrittsgases der $NO_x$-Absorption herangezogen werden.

Die angewärmten Gase mit sehr geringer relativer Luftfeuchigkeit können einem gemauerten Kamin zugeleitet werden, ohne das Risiko eines Feuchtwerdens desselben.

Die Vorteile der Erfindung gegenüber bekannten Stickoxid-Schwefelsäure-Verfahren werden umso bedeutender, je tiefere $SO_2$- und je höhere $NO_x$-Konzentrationen das zu reinigende Abgas aufweist. Vorzugsweise sollte der $SO_2$-Gehalt unter 0,8 Vol-% und der $NO_x$-Gehalt über 100 ppm liegen.

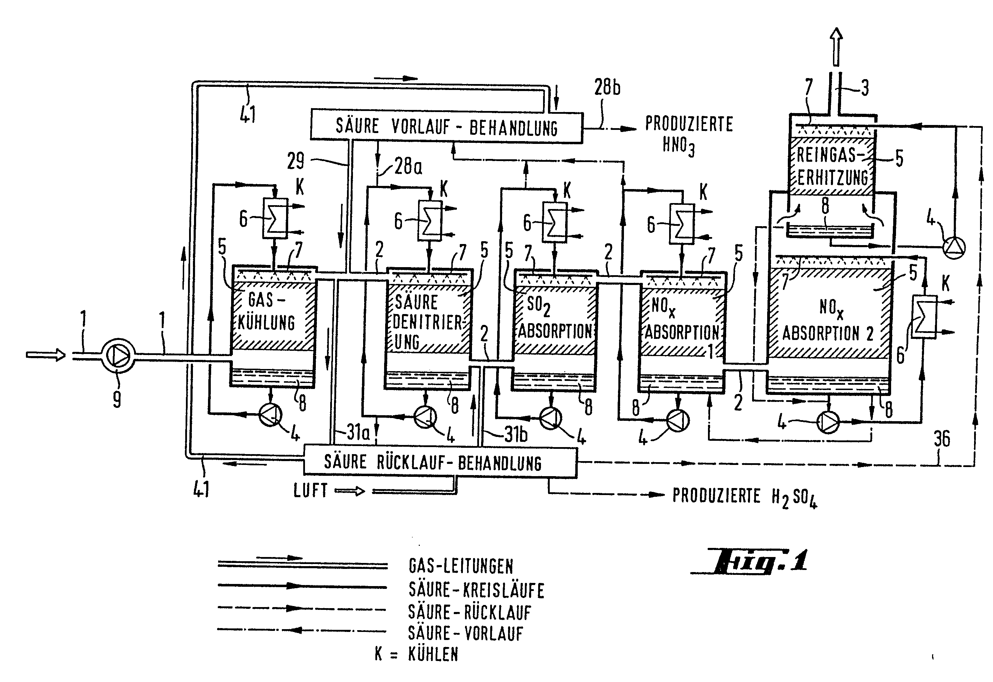

Zur weiteren Erläuterung der Erfindung wird anhand der Figuren 1, 2 und 3 ein Ausführungsbeispiel dargestellt.

Figur 1 zeigt die Behandlung des Abgasstromes in den hintereinandergeschalteten Gaswaschtürmen mit folgenden Funktionen:

Gaskühlung, Säure-Denitrierung, $SO_2$-Absorption, $NO_x$-Absorption 1, $NO_x$-Absorption 2 und Reingas-Erhitzung.

Die Gehalte an $SO_2$, $NO_x$, $H_2O$ und die Gastemperatur vor bzw. nach den Behandlungsstufen zeigt die folgende Tabelle:

| Konzentrationen und Temperaturen des Gasstromes | $SO_2$ g/Nm$^3$ | $NO_3$ (als $NO_2$) g/Nm$^3$ | $H_2O$ g/Nm$^3$ | °C |
|---|---|---|---|---|
| vor Gaskühlung | 12,6 | 1,43 | 125 | 130 |
| nach Gaskühlung | 12,5 | 1,43 | 30 | 26 |
| nach Denitrierung | 6 | 22 | 8 | 38 |
| nach $SO_2$-Absorption | 1 | 20 | 5 | 25 |
| nach $NO_x$-Absorption 1 | 0,5 | 4,5 | 0,1 | 10 |
| nach $NO_x$-Absorption 2 | 0,1 | 0,2 | 0,1 | 7 |
| nach Reingas-Erhitzung | 0,1 | 0,2 | 3 | 60 |

Jeder Behandlungsraum ist mit einem Säurekreislauf ausgestattet, welcher durch Pumpen 4 umgewälzt wird. Mit 1 ist der Rohgaseintritt und mit 9 der Gasförderventilator bezeichnet. 2 sind die Verbindungsleitungen zwischen den Gasbehandlungstürmen und 3 ist der Reingasaustritt. Alle Gasbehandlungsräume enthalten Füllkörperschichten 5. Wie in Figur 1 dargestellt, sind einzelne Säurebehandlungsstufen mit Säurekühlern 6 ausgestattet, um die Säuretemperaturen auf die in der voranstehenden Tabelle genannten Gastemperaturen abzusenken. Mit 7 sind die Säureverdüsungsvorrichtungen in den Gasbehandlungräumen gekennzeichnet.

Die Säuresümpfe im Unterteil der Türme sind mit 8 bezeichnet. Die Füllkörper in den Füllkörperschichten 5 haben eine Oberfläche von mehr als 300 $m^2/m^3$. Der Bedarf an Reaktionsraum pro 1 $Nm^3$/sec Gas ist für die Denitrierung kleiner als 3 $m^3$, für die $SO_2$-Absorption kleiner als 4 $m^3$, für die $NO_x$-Absorption 1 kleiner als 4 $m^3$, für die $NO_x$-Absorption 2 kleiner als 12 $m^3$ und für die Reingaserhitzung kleiner als 1,5 $m^3$.

Wie bei jedem Stickoxid-Schwefelsäure-System findet zwischen der Säure-Denitrierung und der $NO_x$-Absoprtion ein Säureaustausch statt. Die von der Nitrose befreite Säure, welche in die $NO_x$-Absorption fliesst, wird als "Rücklauf" bezeichnet, während die mit $NO_x$ beladene Säure "Vorlauf" genannt wird. Die in der $SO_2$-Absorption kontinuierlich gebildete Menge an Schwefelsäure wird dem Vorlauf zugemischt.

Dank der starken Kühlung bei der $NO_x$-Absorption werden hohe Konzentrationen an Nitrose in der Säure erreicht. Ausgedrückt in $HNO_3$-Aequivalenten beträgt der Nitrose-Gehalt des Vorlaufes mehr als 200 g $HNO_3$/Liter. Dank dieser hohen Konzentration kann mit geringen Vorlauf- bzw. Rücklaufmengen gearbeitet werden. Im erläuterten Ausführungsbeispiel genügen Mengen von weniger als 500 $g/Nm^3$ zu verarbeitendes Abgas.

Die tiefen Temperaturen im gesamten Behandlungsraum des Hauptgasstromes vereinfachen das Problem einer Auswahl geeigneter Werkstoffe. Es gibt im gesamten Bereich der grossen Behandlungsräume zwischen Gaskühlung und Reingaserhitzung keine Temperaturen höher als 40°C.

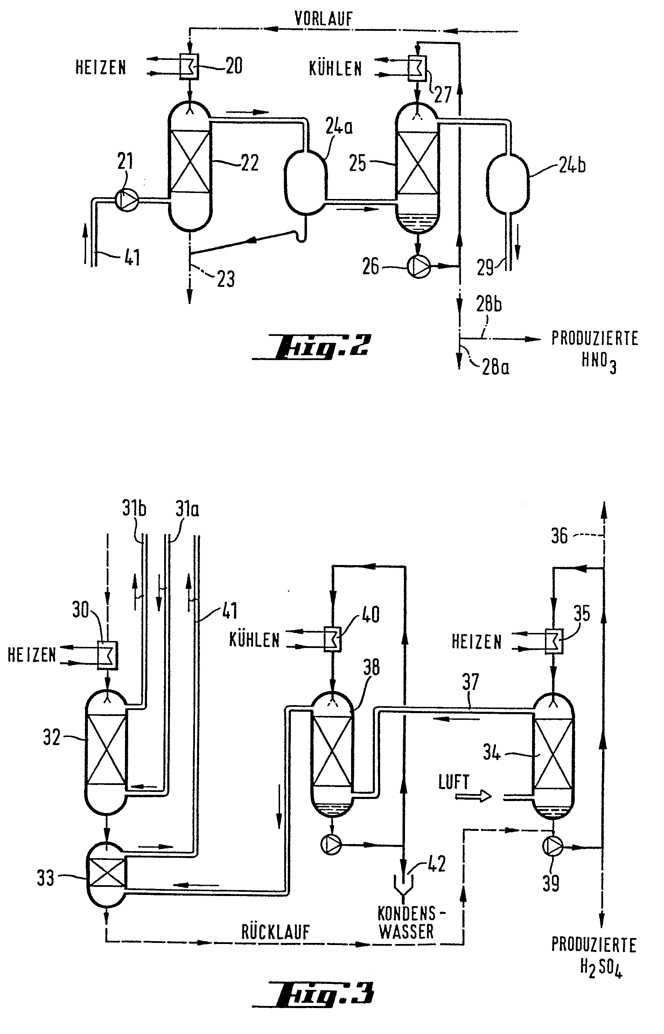

Figur 2 erläutert die Behandlung des Säurevorlaufs. Im Erhitzer 20 wird die Vorlaufsäure auf eine Temperatur von ca. 60°C erhitzt und dem $NO_x$-Stripper 22 zugeleitet. Durch diesen

$NO_x$-Stripper wird mittels der Leitung 41 und dem Ventilator 21 Abluft aus der Säurerücklauf-Behandlung geleitet. Es handelt sich im wesentlichen um schwach verunreinigte Luft, welche sich im Stripper 22 mit $NO_x$ anreichert. Im Oxidationsraum 24 a geht die Hauptmenge des NO in $NO_2$ über. Die Gase gelangen anschliessend in den $HNO_3$-Absorber 25, welcher mit einer Kreislaufpumpe 26 und einem Säurekühler 27 ausgestattet ist. Die Leitung 28 a dient dazu $HNO_3$ in die Denitrierung einzuführen.

Die Leitung 28 b dient zum Wegleiten des produzierten $HNO_3$-Ueberschusses. Die $NO_x$-Austrittsgase des $HNO_3$-Absorbers gelangen in den Oxidationsraum 24 b. Ueber die Leitung 29 gelangt der Gasstrom, welcher mehr $NO_2$ als NO enthält, in die Säuredenitrierung.

Figur 3 dient zur Erläuterung der Behandlung des Säurerücklaufs.

Der aus der Denitrierung stammende Säurerücklauf gelangt in den Erhitzer 30, wo er auf 80°C erhitzt wird, und durchströmt anschliessend den Feindenitrierturm 32. Die Leitungen 31 a und 31 b dienen zur Spülung dieses Turmes mit $SO_2$-haltigem Gas. Es genügt, ca. 5 % der gesamten Abgasmenge durch diesen Turm zu leiten.

Anschliessend gelangt der Säurerücklauf in den $SO_2$-Stripper 33 und danach in den Kreislauf des Konzentrierturms 34. Mit 39 ist die Umlaufpumpe des Konzentrierturms und mit 35 der Säureerhitzer bezeichnet. Die auf ca. 75 % $H_2SO_4$ konzentrierte Säure gelangt über die Leitung 36 in den Kreislauf der Reingaserhitzung. Die wasserdampfhaltige Luft aus dem Konzentrierturm 34 gelangt über die Leitung 37 in den Brüdenkondensator 38.

Dieser Kondensator hat einen Säurekreislauf mit dem Kühler 40. Durch die Leitung 42 wird kontinuierlich anfallendes Kondensat abgeleitet. Die getrocknete Luft dient als Strippluft im $SO_2$-Stripper 33, bevor sie über die Leitung 41 auf die Saugseite des Ventilators 21 geführt wird (siehe Figur 2).

Patentansprüche

1. Verfahren zur Entfernung von Stickstoff- und Schwefeloxiden aus Abgasen, insbesondere aus Rauchgasen von Kraftwerken, nach einem modifizierten Stickoxidverfahren zur Herstellung von Schwefelsäure unter Gewinnung von verwertbaren Stickstoff- und Schwefelverbindungen, dadurch gekennzeichnet, dass mehr als die Hälfte vom Stickoxidgehalt des in das Verfahren eingeleiteten Abgases absorbiert und die stickoxidhaltige Flüssigkeit anschliessend einer Desorption unterworfen wird, worauf

a) das freigesetzte Stickoxid mit einem sauerstoffhaltigen Gas zu einem relativ an Stickoxid und Sauerstoff reichen Gas vermischt wird, in welchem sich Stickstoffmonoxid zu Stickstoffdioxid oxidiert, und das entstandene Stickstoffdioxid und/oder daraus hergestellte Salpetersäure sowie ein Restgehalt an Stickstoffmonoxid in den Hauptstrom des zu behandelnden Abgases eingeführt wird, wobei die in das System eingebrachten Molmengen an vier- und fünfwertigen Stickstoff-Sauerstoff-Verbindungen grösser sind als die daneben eingebrachte Molmenge Stickstoffmonoxid, und

b) die mindestens teilweise von Stickoxiden befreite Flüssigkeit oder deren Hauptmenge nach Durchlaufen der Desorptionsanlage in einen oder mehrere der Gasbehandlungstürme des Hauptabgasstroms zurückgeführt wird.

2. Verfahren gemäss Anspruch 1, dadurch gekennzeichnet, dass die Stickoxide des Abgases in Schwefelsäure absorbiert werden.

3. Verfahren gemäss einem der Ansprüche 1 und 2, dadurch gekennzeichnet, dass die Temperatur der Absorptionsflüssigkeit weniger als 30°C beträgt.

- 13 -

4. Verfahren gemäss Anspruch 1, dadurch gekennzeichnet, dass in der Säuredenitrierung die Schwefelsäurekonzentration kleiner ist als 73 Vol.-%.

5. Verfahren gemäss Anspruch 1, dadurch gekennzeichnet, dass das Abgas und die zu denitrierende Säure die Denitrierstufe des Stickoxidverfahrens im Gleichstrom passieren.

6. Verfahren gemäss einem der Ansprüche 1 und 5, dadurch gekennzeichnet, dass die in der Denitrierstufe des Stickoxidverfahrens vordenitrierte Säure einer Feindenitrierung und/oder Aufkonzentrierung unterworfen wird.

7. Verfahren gemäss Anspruch 6, dadurch gekennzeichnet, dass die aus Feindenitrierung und/oder Aufkonzentrierung austretende Säure zum Erhitzen der kalten Austrittsgase der Stickoxidabsorption verwendet wird.

8. Verfahren gemäss Anspruch 1, dadurch gekennzeichnet, dass Abgase mit einem Gehalt von weniger als 0,8 Vo.-% Schwefeldioxid gereinigt werden.

9. Verfahren gemäss einem der Ansprüche 1 und 8, dadurch gekennzeichnet, dass Abgase mit einem Gehalt von mehr als 100 ppm Stickoxid gereinigt werden.

10. Vorrichtung zur Ausführung des Verfahrens gemäss Anspruch 1 mit mehreren hintereinandergeschalteten Gaswaschtürmen für die Gaskühlung, Säuredenitrierung, Schwefeldioxidabsorption, Stickoxidabsorption 1 und 2 und Reingaserhitzung, gekennzeichnet durch eine Anlage zur Desorption der aus der Stickoxidabsorption zugeleiteten stickoxidhaltigen Flüssigkeit, enthaltend einen Erhitzer (20) für die stickoxidhaltige Flüssigkeit, einen Stickoxidstripper (22) mit einer einen Ventilator (21) aufweisenden Zuleitung (41) für ein sauerstoffhaltiges Gas, ein mit dem Stripper (22) über eine Leitung verbundener Oxidationsraum (24a), von dem eine Leitung zu einem Salpetersäureabsorber (25) führt, der an einer Kreislaufleitung mit einer Kreislaufpumpe (26) und einem Säurekühler (2) ausgestattet ist, eine Leitung 28a) für die Zuführung von Salpetersäure in die Säuredenitrierung der Abgasbehandlung, eine Leitung (28b) zum Wegleiten des produzierten Ueberschusses an Salpetersäure, ein über eine Leitung mit dem Salpetersäureabsorber (25) verbundener zweiter Oxidationsraum (24b) und eine Leitung (29)für die Zuführung von überwiegend Stickstoffdioxid enthaltenden Stickoxidgasen in die Säuredenitrierung der Abgasbehandlung.

FO 7.1 SL/hc*

**Fig. 1**

GAS-LEITUNGEN
SÄURE-KREISLÄUFE
SÄURE-RÜCKLAUF
SÄURE-VORLAUF
K = KÜHLEN

-2|2-

**VORLAUF**

HEIZEN — 20    KÜHLEN — 27

21    22 — 24a    25    24b

41    23    26    29

28b

28a    PRODUZIERTE HNO₃

*Fig.2*

31b  31a

30    KÜHLEN — 40    36

HEIZEN    38    37

32    HEIZEN — 35

33    LUFT    34

42

39

KONDENS-WASSER

RÜCKLAUF    PRODUZIERTE H₂SO₄

*Fig.3*